(19) Europäisches Patentamt
European Patent Office
Office européen des brevets

(11) **EP 4 600 945 A1**

(12) **EUROPEAN PATENT APPLICATION**

(43) Date of publication:
**13.08.2025  Bulletin 2025/33**

(21) Application number: **25157200.4**

(22) Date of filing: **11.02.2025**

(51) International Patent Classification (IPC):
**G10K 11/02** (2006.01)

(52) Cooperative Patent Classification (CPC):
**G10K 11/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.02.2024  US 202463552500 P**
**06.02.2025  US 202519046889**

(71) Applicant: **II-VI Delaware, Inc.**
**Wilmington, DE 19890 (US)**

(72) Inventors:
• **BRANIGAN, Kyle**
  **Wilmington, 19890 (US)**
• **ARGONDIZZO, Adam**
  **Wilmington, 19890 (US)**
• **GENTNER, Harrison**
  **Wilmington, 19890 (US)**
• **DAVIS, Ryan**
  **Wilmington, 19890 (US)**

(74) Representative: **Schmidt, Christian**
**ZSP Patentanwälte PartG mbB**
**Hansastraße 32**
**80686 München (DE)**

(54) **PASSIVE INTERFERENCE REDUCTION IN POCKELS CELLS**

(57)    This disclosure describes a system and method for providing multi-material selection for elimination of back-reflected acoustic waves to produce acoustic compensation of an electro-optic modulator (EOM) for use in the Long-Wave Infrared (LWIR) and Mid-Wave Infrared (MWIR) spectrum.

**100**

| Material 1 101 | Matching Layer 103 | Material 2 105 |

**FIG. 1**

Processed by Luminess, 75001 PARIS (FR)

**Description**

CROSS REFERENCE TO RELATED APPLICATIONS

This application claims priority to and the benefit of U.S. Provisional Patent Application No. 63/552,500 entitled "MULTI-MATERIAL SELECTION FOR ELIMINATION OF BACK-REFLECTED ACOUSTIC WAVES" filed February 12, 2024, which is hereby incorporated herein by reference in its entirety.

BACKGROUND

Limitations and disadvantages of a traditional systems and methods for reducing acoustic waves will become apparent to one of skill in the art, through comparison of such approaches with some aspects of the present method and system set forth in the remainder of this disclosure with reference to the drawings.

BRIEF SUMMARY

Systems and methods provide multi-material selection for elimination of back-reflected acoustic waves, substantially as illustrated by and/or described in connection with at least one of the figures, as set forth more completely in the claims.

BRIEF DESCRIPTION OF THE DRAWINGS

FIG. 1 illustrates an example system, with a matching layer, operable to reduce the generation of back-reflected acoustic waves, in accordance with various example implementations of this disclosure.

FIG. 2 illustrates an example a system, with a stack of matching layers operable to reduce the generation of back-reflected acoustic waves, in accordance with various example implementations of this disclosure.

DETAILED DESCRIPTION

The following discussion provides various examples of systems and methods for reducing acoustic effects in Pockels cells. Such examples are non-limiting, and the scope of the appended claims should not be limited to the particular examples disclosed. In the following discussion, the terms "example" and "e.g." are non-limiting.

The figures illustrate the general manner of construction, and descriptions and details of well-known features and techniques may be omitted to avoid unnecessarily obscuring the present disclosure. In addition, elements in the drawing figures are not necessarily drawn to scale. For example, the dimensions of some of the elements in the figures may be exaggerated relative to other elements to help improve understanding of the examples discussed in the present disclosure. The same reference numerals in different figures denote the same elements.

The term "or" means any one or more of the items in the list joined by "or". As an example, "x or y" means any element of the three-element set {(x), (y), (x, y)}. As another example, "x, y, or z" means any element of the seven-element set {(x), (y), (z), (x, y), (x, z), (y, z), (x, y, z)}.

The terms "comprises," "comprising," "includes," and/or "including," are "open ended" terms and specify the presence of stated features, but do not preclude the presence or addition of one or more other features.

The terms "first," "second," etc. may be used herein to describe various elements, and these elements should not be limited by these terms. These terms are only used to distinguish one element from another. Thus, for example, a first element discussed in this disclosure could be termed a second element without departing from the teachings of the present disclosure.

Unless specified otherwise, the term "coupled" may be used to describe two elements directly contacting each other or describe two elements indirectly connected by one or more other elements. For example, if element A is coupled to element B, then element A can be directly contacting element B or indirectly connected to element B by an intervening element C. Similarly, the terms "over" or "on" may be used to describe two elements directly contacting each other or describe two elements indirectly connected by one or more other elements.

Light is a fundamental phenomenon with diverse properties and applications, spanning the electromagnetic spectrum from radio waves to gamma rays. While the human eye perceives only the visible spectrum, light extends beyond this range to comprise longer wavelengths, such as infrared, and shorter wavelengths, such as ultraviolet and x-rays. These variations in wavelength correspond to changes in energy and offer unique interactions with materials, enabling specialized technologies. For example, long-wave infrared (LWIR) light, characterized by its lower energy and longer wavelengths compared to visible light, plays a crucial role in fields such as imaging, industrial processing, and advanced optics.

A key attribute of light is its polarization-the orientation of its electric field in space. Polarization can manifest as linear, circular, or elliptical, depending on the interaction of the light wave with materials or filters. This property is particularly significant when working with coherent light sources like lasers, which propagate in a uniform direction and exhibit consistent wavelength and polarization. The ability to manipulate polarization may enable precise control over light for applications such as optical switching and modulation.

The electro-optic effect, specifically the Pockels effect, is central to the operation of electro-optic modulators (EOMs), which allow dynamic control of light polarization. This effect occurs in certain non-centrosymmetric crystals, where an applied electric field induces changes in the refractive index, altering the polarization state of transmitted light. Materials such as cadmium telluride (CdTe), gallium arsenide (GaAs), zinc selenide (ZnSe), zinc sulfide (ZnS), cadmium zinc telluride (CdZnTe or CZT), and boron arsenide (BAs) are among the few capable of supporting this effect in the LWIR and mid-wave infrared (MWIR) spectra due to their specific optical and structural properties.

Pockels cells, a primary component of EOMs, utilize these electro-optic materials to modulate light at high speeds without moving parts. By applying a voltage and/or an electrical field across the crystal, the birefringence of the material may be controlled, allowing phase modulation of laser beams with nanosecond precision. This capability is critical in advanced applications, such as extreme ultraviolet (EUV) lithography, where precise timing and modulation of light are essential for producing state-of-the-art microchips.

The present disclosure relates to systems and methods for improving the performance of electro-optic modulators (EOMs) by mitigating undesired acoustic effects. This disclosure addresses systems and methods for reducing acoustic wave reflections that degrade modulation efficiency, durability, and thermal handling capabilities.

Electro-optic modulators are widely used in high-precision laser systems, such as applications involving high-power lasers and rapid modulation frequencies. A key challenge in such systems is the generation of acoustic waves within the EOM crystal due to the coupling of piezoelectric and electro-optic effects. These acoustic waves may induce stress-induced birefringence, reducing the extinction ratio and overall efficiency of the system. This issue is particularly critical in systems operating at specific resonant frequencies, where acoustic reflections amplify and exacerbate performance degradation.

A system and method for reducing or eliminating acoustic effects in EOMs are disclosed. The system comprises impedance-matched layers designed to reduce the generation of back-reflected acoustic waves. These layers may improve the modulation efficiency, durability, and thermal handling capabilities of the EOM system, enabling enhanced performance across a broad range of fundamental frequencies from 1 kHz to 450 kHz and their various resonant modes and beat frequencies.

The disclosed system leverages impedance-matched materials, optimized layer thicknesses, and advanced bonding techniques to minimize acoustic reflections. This allows for modulation control while maintaining the integrity of high-power laser operations.

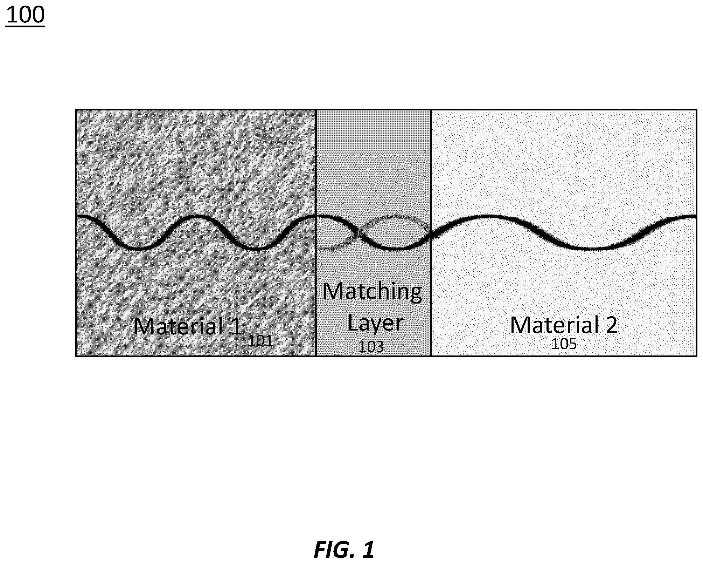

FIG. 1 illustrates an example system, with a matching layer, operable to reduce the generation of back-reflected acoustic waves, in accordance with various example implementations of this disclosure.

FIG. 1 illustrates an example of an acoustic damping system in an EOM. The system comprises a source material 101, a load material 105, and a matching layer 103.

The source material 101 is the origin of the acoustic wave (e.g., the EOM crystal). The matching layer 103 may optimize the transfer energy between the first material 101 and the load material 105.

To maximize acoustic wave transmission and minimize reflections, the impedance of the matching layer 103 may be calculated as:

$$Z_m = \sqrt{Z_1 Z_2} \qquad \text{equation 1}$$

where $Z_1$ = impedance of the source material 101, $Z_2$ = impedance of the load material 105, and $Z_m$ = impedance of a matching layer material 103 through which the acoustic wave may be transferred.

The thickness of the matching layer 103 may be an integer multiple of a quarter wavelength of the source signal such that reflections destructively interfere. The wavelength may be calculated as:

$$\lambda = \frac{c}{f} \qquad \text{equation 2}$$

where $f$ = frequency of propagated sound and c = speed of sound in the load material 105.

Characteristic specific acoustic impedance may be calculated as:

$$Z = \rho * c \qquad \text{equation 3}$$

where $\rho$ = density and $c$ = speed of sound in the load material 105.

A back-reflected wave may be calculated as the reflectivity, according to an impedance mismatch, from source material 101 into load material 105:

$$R = \frac{Z_2 - Z_1}{Z_2 + Z_1} \qquad \text{equation 4}$$

Transmissivity may be calculated as:

$$T = \frac{2Z_2}{Z_2 + Z_1} \qquad \text{equation 5}$$

The magnitude of the back-reflected wave may be determined according impedance mismatch.

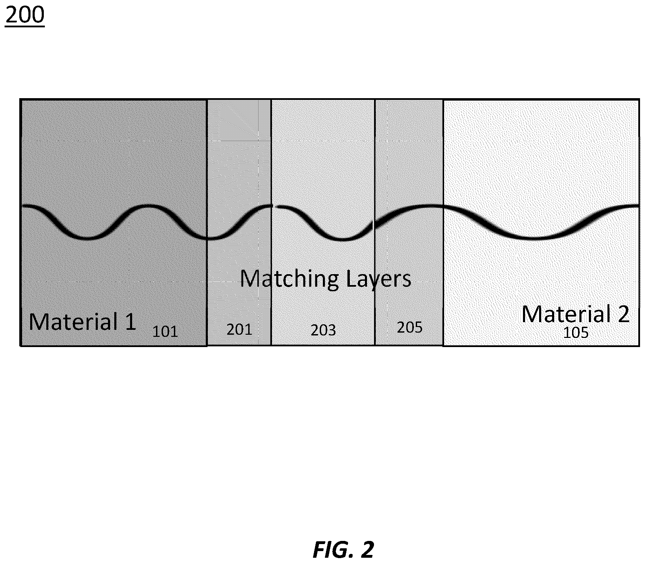

FIG. 2 illustrates an example a system, with a stack of matching layers operable to reduce the generation of back-reflected acoustic waves, in accordance with various example implementations of this disclosure.

FIG. 2 illustrates a stack of multiple matching layers 201, 203, 205 designed to handle more complex impedance mismatches. The ideal acoustic impedance for each *layer* (1, 2...n) in an *n* layer stack may be iteratively optimized as:

$$Z_{layer} = \sqrt[n]{Z_1^{n-layer} Z_2^{layer}} \qquad \text{equation 6}$$

where $Z_1$ = impedance of material 1 101, $Z_2$ = impedance of material 2 105, and $Z_{layer}$ = impedance of a damping material 201, 203, 205 at *layer* (1, 2...n) through which the acoustic wave may be transferred.

The materials for matching layers 201, 203, 205 may be selected according to impedance, density and bond compatibility. The impedance of the matching layers 201, 203, 205 are selected for compatibility with adjacent layers to minimize reflections. Higher density materials may reduce the magnitude of back-reflected waves.

The bond compatibility of material is considered to configure strong, thin bonds to facilitate acoustic wave transmission. Preferred bonding methods comprise optical contacting, solid diffusion bonding, eutectic bonding, brazing, and/or gluing. Metals, metallic oxides, and alloys such as stainless steel, brass, copper, tin, and titanium may be used for matching layers 201, 203, 205 due to their favorable properties. The matching layers 201, 203, 205 may also comprise phase-changing, thixotropic, and/or non-Newtontian materials. The bonding layer may also be configured for acoustic matching.

The disclosed system may be optimized for a broad range of frequencies, particularly between 40 kHz and 450 kHz, with peak performance at, for example, 50 kHz. Frequencies above 450 kHz may introduce new challenges due to limited propagation time for acoustic waves.

The disclosed system may accommodate high-power laser operations, addressing thermal effects through material selection and structural optimization. Two common materials used for EOM crystals comprise Cadmium Telluride and Gallium Arsenide.

The disclosed system and method may improve modulation efficiency. The system may mitigate stress-induced birefringence by minimizing acoustic reflections.

The disclosed system and method may enhance durability. For example, reduced mechanical stress may extend the operational lifespan of the EOM.

The disclosed system and method may be compatible with a broad fundamental frequency range (e.g., from 1 kHz to 450 kHz) to enable versatility across applications.

The disclosed system and method may provide thermal stability. Effective thermal management may support high-power laser operations without degradation. The matching layer may be configured for real-time adjustment.

The disclosed system represents an advancement in the design and operation of EOMs, addressing critical challenges posed by acoustic effects. By leveraging impedance-matched layers, optimized materials, and precise bonding techniques, the system may enable high performance, durability, and adaptability across a wide range of frequencies and applications.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

**Claims**

1. A system, comprising:

   a non-centrosymmetric crystal;
   a load material; and
   a matching layer operable to reduce a generation of back-reflected acoustic waves, wherein: an acoustic impedance of the matching layer is determined according to a square root of a product of an impedance of the non-centrosymmetric crystal and an impedance of the load material.

2. The system of claim 1, wherein the matching layer comprises a composite material configured for thermal stability.

3. The system of claim 1, wherein the system comprises a plurality of matching layers.

4. The system of claim 1, wherein the non-centrosymmetric crystal supports long-wave infrared (LWIR) wavelengths.

5. The system of claim 1, wherein the non-centrosymmetric crystal supports mid-wave infrared (MWIR) wavelengths.

6. The system of claim 1, wherein the system is configured for integration into an optical application.

7. The system of claim 1, wherein the matching layer comprises a metallic oxide.

8. The system of claim 1, wherein the system is configured to dampen mechanical vibrations.

9. The system of claim 1, wherein the matching layer comprises at least one of a phase-changing material, a thixotropic material, and a non-Newtontian material.

10. The system of claim 1, wherein the matching layer is configured for real-time adjustment.

11. A method, comprising:

    placing a matching layer between a non-centrosymmetric crystal and a load material, an impedance of the non-centrosymmetric crystal is different than an impedance of the load material;
    determining a thickness of the matching layer as an integer multiple of a quarter wavelength of an acoustic wave; and
    reducing a generation of back-reflected acoustic waves via the matching layer.

12. The method of claim 11, wherein the matching layer comprises a composite material configured for thermal stability.

13. The method of claim 11, wherein the matching layer comprises a plurality of material layers.

14. The method of claim 11, wherein the non-centrosymmetric crystal supports long-wave infrared (LWIR) wavelengths.

15. The method of claim 11, wherein the non-centrosymmetric crystal supports mid-wave infrared (MWIR) wavelengths.

16. The method of claim 11, wherein the non-centrosymmetric crystal, the matching layer, and the load material are configured for integration into an optical system.

17. The method of claim 11, wherein the matching layer comprises a metallic oxide.

18. The method of claim 11, wherein the matching layer is configured to dampen mechanical vibrations.

19. The method of claim 11, wherein the matching layer comprises at least one of a phase-changing material, a thixotropic material, and a non-Newtontian material.

20. The method of claim 11, wherein the matching layer is configured for real-time adjustment.

100

Material 1 101   Matching Layer 103   Material 2 105

**FIG. 1**

EP 4 600 945 A1

200

FIG. 2

Europäisches
Patentamt

European
Patent Office

Office européen
des brevets

## EUROPEAN SEARCH REPORT

Application Number

EP 25 15 7200

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 353 262 A (YAKYMYSHYN CHRISTOPHER P [US] ET AL) 4 October 1994 (1994-10-04) | 1,6,9, 11,16,19 | INV. G10K11/02 |
| Y | * column 6, line 16 - line 53 * <br> * column 8, line 28 - line 54; claims 1, 6, 14; figures 2A, 2B * | 2-5,7,8, 10, 12-15, 17,18,20 | |
| | ----- | | |
| Y | US 2012/105931 A1 (DERI ROBERT J [US] ET AL) 3 May 2012 (2012-05-03) <br> * paragraphs [0036], [0042] - [0065]; figure 2 * | 2-5,7, 12-15,17 | |
| | ----- | | |
| Y | US 2019/362698 A1 (ALIE SUSAN A [US] ET AL) 28 November 2019 (2019-11-28) <br> * paragraphs [0005], [0059] * | 8,10,18, 20 | |
| | ----- | | |

|  | TECHNICAL FIELDS SEARCHED (IPC) |
|---|---|
|  | G10K <br> G01H |

The present search report has been drawn up for all claims

| Place of search | Date of completion of the search | Examiner |
|---|---|---|
| The Hague | 27 June 2025 | Vollmer, Thorsten |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 7200

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2025

| Patent document cited in search report | | Publication date | Patent family member(s) | | Publication date |
|---|---|---|---|---|---|
| US 5353262 | A | 04-10-1994 | NONE | | |
| US 2012105931 | A1 | 03-05-2012 | CA | 2815068 A1 | 03-05-2012 |
| | | | EP | 2633362 A2 | 04-09-2013 |
| | | | EP | 3528039 A1 | 21-08-2019 |
| | | | JP | 6071889 B2 | 01-02-2017 |
| | | | JP | 2013545135 A | 19-12-2013 |
| | | | KR | 20130132455 A | 04-12-2013 |
| | | | RU | 2013124063 A | 10-12-2014 |
| | | | US | 2012105931 A1 | 03-05-2012 |
| | | | WO | 2012058123 A2 | 03-05-2012 |
| US 2019362698 | A1 | 28-11-2019 | AU | 2017376276 A1 | 23-05-2019 |
| | | | CA | 3043044 A1 | 21-06-2018 |
| | | | CN | 110049728 A | 23-07-2019 |
| | | | EP | 3554377 A1 | 23-10-2019 |
| | | | JP | 2020512023 A | 23-04-2020 |
| | | | KR | 20190092526 A | 07-08-2019 |
| | | | US | 2019180728 A1 | 13-06-2019 |
| | | | US | 2019362698 A1 | 28-11-2019 |
| | | | US | 2022415296 A1 | 29-12-2022 |
| | | | WO | 2018112042 A1 | 21-06-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63552500